# EUROPÄISCHE PATENTSCHRIFT

(11) **EP 2 700 146 B1**
(45) Veröffentlichungstag und Bekanntmachung des Hinweises auf die Patenterteilung: **14.10.2015**
(21) Anmeldenummer: 11723026.8
(22) Anmeldetag: 24.05.2011
(51) Int. Cl.: H02K 1/18, H02K 1/20, H02K 5/24

(54) **DYNAMOELEKTRISCHE MASCHINE MIT EINEM BLECHPAKET EINES STATORS UND EINEM SELBSTTRAGENDEN GEHÄUSE**
DYNAMO-ELECTRIC MACHINE WITH A LAMINATED CORE STATOR AND A SELF-SUPPORTING HOUSING
MACHINE DYNAMOÉLECTRIQUE COMPRENANT UN PAQUET DE TÔLES STATORIQUES ET UN BOÎTIER AUTOPORTEUR

(43) Veröffentlichungstag der Anmeldung: 26.02.2014
(73) Patentinhaber: Siemens Aktiengesellschaft, 80333 München (DE)
(72) Erfinder: GRILLENBERGER, Reiner, 91575 Windsbach (DE); KOCH, Thomas, 90459 Nürnberg (DE); WERNER, Ulrich, 91088 Bubenreuth (DE); SINDELKA, Martin, 90478 Nürnberg (DE); DORR, Gerhard, 90584 Allersberg (DE)
(86) Internationale Anmeldenummer: PCT/EP2011/058407
(87) Internationale Veröffentlichungsnummer: WO 2012/159661

(56) Entgegenhaltungen:
- EP-A2- 0 027 428
- GB-A- 368 245
- JP-A- 59 209 053
- JP-A- 2004 343 938
- JP-A- 2007 318 924
- JP-U- 61 017 840

## Beschreibung

Die Erfindung betrifft eine dynamoelektrische Maschine mit einem Blechpaket eines Stators in einem Gehäuse.

Es gibt eine Vielzahl von Motorkonzepten für Luft- und Wasserkühlung, für das Anbringen des Klemmkastens, für die Anordnung von Lagern, als auch für eine konkrete Ausgestaltung der Kühlung einer dynamoelektrischen Maschine. So ist eine Luftkühlung aus der EP 0 387 743 A1 bekannt. In der DE 197 42 255 C1 ist eine gehäuselose Drehstrommaschine mit achsparallelen Kühlrohren in einem Ständerblechpaket beschrieben. Weiterhin sind flüssigkeitsgekühlte elektrische Maschinen aus der US 5 084 642 A und der DE 91 12 631 U1 bekannt, wobei dabei in die Lagerschilde Umlenkungen und Ein- und Auslaufstutzen eingegossen sind. Dabei führt jede Änderung der Achshöhe, der Kühlungsart, der Anordnung des Klemmenkastens zu einem nahezu komplett neuen Aufbau und Konzeption der dynamoelektrischen Maschine.

Gehäuselose elektrische Maschinen weisen eine mangelnde Steifigkeit auf und sind zur Lagerung der Welle mit Topflagerschilden zu versehen, die vergleichsweise aufwändig und teuer sind. Eine gehäuselose elektrische Maschine ist aus der AT 170 766 bekannt, deren Bleche Kühl- und Fußfortsätze aufweisen.

Dynamoelektrische Maschinen mit Gehäuse führen zu einer Vergrößerung des Aktivteils, da u.a. die Kühlung nicht im gleichen Umfang wie bei einer gehäuselosen Maschine gegeben ist.

Die GB 368 245 A beschäftigt sich mit der Vergrößerung eines Aktivteils einer elektrischen Maschine im Zusammenhang mit deren Kühlung. Die GB 368 245 A lehrt Bleche für den Stator zu verwenden, denen ein Kreis einbeschreibar ist, der den für den magnetischen Fluss nützlichen Teil umschließt. Außerhalb des Kreises können Löcher für die Kühlung angebracht werden. Es wird dadurch die radiale Höhe der elektrischen Maschine reduziert, dass außerhalb des Kreises oben in der Mitte am Blechpaket keine Löcher sind, sondern gegebenenfalls, wie im Ausführungsbeispiel der GB 368 245 A, in Ecken des Blechpakets.

Die WO200502278 A1 beschäftigt sich mit einem laminierten Stator mit Kühlrippen für eine elektrische Maschine mit einem Stator und Rotor. In der WO200502278 A1 wird beschrieben, dass zur Kühlung des Rotors bzw. Stators die Wärmeübertragung vom Rotor oder dem Stator über die Kühlrippen an die Luft des Luftstroms maximiert wird, indem die Kühlrippen von axial nebeneinander angeordneten Gruppen aus Lamellen oder Blechen versetzt zueinander verlaufen. Dadurch wird der Luftstrom zwischen und angrenzend an die Kühlrippen gestört und Turbulenz des Luftstroms gefördert. Zur Führung des Luftstroms innerhalb einer Abdeckung in den Rippenabschnitten des Stators wird angegeben, dass es hierfür vorteilhaft ist, wenn die Abdeckung näher an der Außenseite des Stators ist als wenn die Abdeckung einem geraden Weg zwischen benachbarten Befestigungsstangen verläuft.

Ausgehend davon, liegt der Erfindung die Aufgabe zugrunde, unter Berücksichtigung der neuen Wirkungsgradklassen eine dynamoelektrische Maschine, insbesondere für die Niederspannungsebene zu schaffen, die vergleichsweise einfach herstellbar ist, und die oben genannten Nachteile vermeidet.

Die Lösung der gestellten Aufgabe gelingt durch eine dynamoelektrische Maschine mit den Merkmalen des Patentanspruchs 1.

Dieses selbsttragende Gehäuse weist erfindungsgemäß einen einfachen eckigen Blechpaketabschnitt auf, der ein eckiges Blechpaket umfasst. Des Weiteren weist das erfindungsgemäße selbsttragende Gehäuse zumindest einen Anschlussabschnitt in axialer Verlängerung an den Blechpaketsabschnitt auf. Bei mehreren Anschlussabschnitten sind diese beidseitig an den axialen Enden des Blechabschnitts angeordnet.

Erfindungsgemäß werden nunmehr die Aufgaben des selbstragenden Gehäuses klar festgelegt und umrissen. Damit ergibt sich ein Plattformkonzept, das nunmehr ermöglicht einzelne Ausführungsformen (beispielsweise Flüssigkeitskühlung, Luftkühlung, Maschine mit und ohne Geräuschdämmung, Rückkühler an Maschine, Klemmenkasten oben oder an der Seite etc.) in einfacher Art und Weise zu realisieren, ohne ein neues Maschinenkonzept neu zu entwerfen und herzustellen.

So dient der Blechpaketabschnitt des Gehäuses der Fixierung des Blechpakets eines Stators über die festgelegten Anlagebereiche zwischen Blechpaketabschnitt und Blechpaket, insbesondere als Drehmomentenstütze und/oder zur Paketierung des Blechpakets.

In einer weiteren Ausführungsform sind die Seitenflächen des Blechpaketsabschnitts des Gehäuses offen, so dass lediglich ein Rahmen, ggf. durch ein oder mehrere Streben verstärkt die oben genannten Aufgaben erfüllt. Der Blechpaketabschnitt weist somit als Grundform ein regelmäßiges Prisma mit verstärkten Kanten auf.

Der Anschlussabschnitt ist in axialer Verlängerung unmittelbar und direkt am Blechpaketabschnitt angeordnet. Anschlussabschnitt und Blechpaketabschnitt sind vorteilhafterweise aus einem Material, und insbesondere einstückig ausgeführt.

Das selbstragende Gehäuse mit seinem Blechpaketabschnitt und seinem Anschlussabschnitt ist äußerst einfach aufgebaut und besteht nur aus wenigen Grundelementen. Diese können aus Stahl, Stahlguss oder Grauguss oder auch aus Aluminium gefertigt werden.

Sämtliche Anschlussmöglichkeiten von Zusatzvorrichtungen und/oder Hilfsaggregaten, z.B. Luftführung, Luftverteilung, Anbringung eines Lüfters, Anbringung von Aufsatzkühlern, Lagerschilden, Klemmenkasten erfolgen nunmehr ausschließlich über den einen oder die weiteren Anschlussabschnitte des Gehäuses. Bei zwei Anschlussabschnitten befindet sich der Blechpaketabschnitt zwischen diesen beiden Anschlussabschnitten. Funktionen bzw. Anschlussmöglichkeiten des Anschlussabschnitts, die nicht genutzt werden, beispielsweise weil nur eine Fremdkühlung vorgesehen ist, aber kein Aufsatzkühler, können durch Blindstopfen bzw. Blindabdeckungen am Anschlussabschnitt abgedeckt bzw. geschlossen werden. Dies vereinfacht den grundsätzlichen Aufbau des Gehäuses, da nunmehr bei einer Achshöhe einer dynamoelektrischen Maschine nur ein Gehäuse vorzusehen ist, mit dem sämtliche Anschlussmöglichkeiten, Kühlmöglichkeiten realisierbar sind.

Beispielsweise können somit sämtliche Kühlarten, wie z.B. eigen- oder fremdbelüftet, wassergekühlt oder wassergekühlt mit Fremdbelüftung, als auch ein separater Aufsatzkühler realisiert werden.

Vorteilhafterweise ist die Lage des Klemmenkastens durch das sehr einfache Gehäuse mit seinen Anschlussabschnitten nahezu frei wählbar, da die Anbringung des Klemmenkasten nur an den Anschlussabschnitt und nicht an bestimmte Aufnahmeflächen, wie z.B. bei einem Rippengehäuse gebunden ist.

Grundsätzlich ist das Blechpaket des Stators als achteckige Grundform ausgeführt, wobei in Umfangsrichtung betrachtet kürzere und längere Seiten abwechselnd angeordnet sind.

Dabei ist als Umfangsrichtung eine gedachte Ebene definiert, die senkrecht auf der virtuellen Maschinenachse angeordnet ist. Diese Ebene verläuft parallel zu den einzelnen Blechen des Blechpakets.

Die als Blechpaket angeordneten Bleche weisen an ihren äußeren Seiten - von den Anlagebereichen abgesehen - oberflächenvergrößernde Strukturen auf. Ergänzend sind dabei auch im Blechpaket axial verlaufende Ausnehmungen vorgesehen. Diese oberflächenvergrößernden Strukturen, wie Kühlrippen oder Klammernuten für Kühlrohre und/oder die axialen Ausnehmungen werden im Betrieb der dynamoelektrischen Maschine für Luftoder Flüssigkeitskühlung angezogen. Damit lässt sich die Maschine in einfacher Art und Weise entweder als Flüssigkeitsgekühlte oder Luftgekühlte Maschine ausführen. Auch eine Kombinationskühlung (Luft und Flüssigkeit) ist selbstverständliche ohne große Umstellung an Maschine möglich.

Die Anlagebereiche sind vorteilhafterweise an den kürzeren Seiten vorgesehen, so dass zwischen einer Seitenwand des Blechpaketabschnitts des Gehäuses und einer längeren Seite des Blechpakets ein vorgegebener Abstand einstellbar ist. In diesen Freiraum sind beispielsweise Geräuschdämmmatten einlegbar. Durch den minimierten Kontakt von Blechpaket und Gehäuse reduzieren sich die Lärmemissionen. Diese können durch die Dämmmaterialien weiter reduziert werden.

Des Weiteren ergibt sich durch die erfindungsgemäße dynamoelektrische Maschine mit ihrem selbsttragenden Gehäuse und ihrem Blechpaket ein optimierter Materialeinsatz, da nunmehr die Ecken des Blechpakets im Gegensatz zu einem runden Blechpaket mit verwendet werden können. Des Weiteren ergibt sich durch die Verwendung eines selbsttragenden Gehäuses eine hohe Steifigkeit des Gehäuses. Somit können die Momente aufgenommen werden. Dies sind im Betrieb der elektrischen Maschine die Drehmomente als auch bei einem Kurzschlussfall die Kurzschlussmomente.

Sind die Seitenwände des Blechpaketsabschnitts geschlossen ist das Blechpakets u.a. gegen Korrosionseinwirkungen geschützt.

Durch den erfindungsgemäßen Aufbau einer dynamoelektrischen Maschine lassen sich in einfacher Art und Weise die in IEC 34-7 festgelegten Schutzarten einfach realisieren.

Der erfindungsgemäße Aufbau ist auch besonders wirtschaftlich zu realisieren, da teuere Topflagerschilde durch die Verwendung dieses selbsttragenden Gehäuses durch Standardlagerschilde ersetzt werden. Die Lagerschilde sind in den Anschlussabschnitten angeordnet.

Vorteilhafterweise kann das selbstragende Gehäuse in Umfangsrichtung betrachtet ein-, zwei- oder mehrteilig ausgeführt werden, um so insbesondere bei dynamoelektrischen Maschinen größerer Achshöhen während der Montage das Gehäuse besser handhaben zu können. Die einzelnen Teile werden dann nach Positionieren auf dem Blechpaket kraftschlüssig miteinander verbunden, um die oben genannten Momente aufnehmen zu können.

Das Blechpaket des Stators ist grundsätzlich an seinen Stirnseiten mit Druckplatten beaufschlagt, die die einzelnen axial beschichteten Bleche miteinander verpressen.

Nach einem Ausführungsbeispiel entsprechen die Druckplatten im Bereich der Statorbohrung und ggf. der Nuten als auch eventueller Kühlausnehmungen den Abmessungen der Bleche, sind jedoch in ihrem Außendurchmesser größer als die einzelnen Bleche. Dadurch ergibt sich der Vorteil, dass ausschließlich die Druckplatten an den vorgegebenen Anlagebereichen an der Innenseite des Blechpaketsabschnitts des Gehäuses zum Liegen kommen. Damit stellt sich zwischen den Seiten des Blechpakets, das vorteilhafterweise eine achteckige Grundform aufweist, mit kürzeren und längeren Blechpaketseiten ein Freiraum zwischen der Oberfläche des Blechpakets und der Innenseite des Blechpaketsabschnitts ein. In diesen Freiraum sind nunmehr Dämmmaterialien einsetzbar, vorteilhafterweise bereits vorgefertigte Dämmmatten, die auf vorgegebene Schwingungsfrequenzen und Geräuschfrequenzen von Motor und/oder einem an den Motor angeschlossenen Umrichter abstimmbar sind und so von vorne herein gewisse Frequenzen bereits ausfiltern.

Durch die innenliegende Anordnung sind nunmehr die Dämmmaterialien von äußeren Einflüssen, wie Witterung oder mechanische Beschädigung geschützt und sind somit länger in ihrer Funktionsweise erhalten. Außerdem sind die Dämmmatten in einem abgeschlossenen Freiraum und können so nicht durch Vibrationen des Blechpakets in die Wicklung oder den Läufer rutschen.

Vorteilhafterweise sind die Dämmmatten am Blechpaket oder an der Innenseite des Blechpaketsabschnitts geklebt, geschraubt oder durch Halteösen befestigt. Diese Dämmmatten führen zu einer Geräuschreduzierung, wie sie insbesondere bei einem Betrieb der dynamoelektrischen Maschine am Umrichter äußerst wichtig ist. Diese Geräusche entstehen durch mechanische Schwingungen der Wicklungen, die in den Nuten des Stators angeordnet sind und sich mit der Pulsfrequenz magnetisch abstoßen und anziehen.

Durch diese zusätzliche Maßnahme sind Geräuschgrenzwerte ohne Änderungen an der Umrichter-Steuerung einzuhalten. Damit können Umrichter weiter mit einer niedrigen Taktfrequenz, also insbesondere noch im hörbaren Bereich <16kHz an erfindungsgemäßen dynamoelektrischen Maschinen betrieben werden. Höhere Taktfrequenzen führen außerdem zu höherer Verlustleistung der Umrichter.

In einer weiteren Ausführungsform entsprechen die Druckplatten in ihren äußeren Abmessungen zumindest im Bereich der Anlagebereiche dem der Bleche des Statorblechpakets. Damit liegen sowohl die Druckplatten als auch die Bleche des Blechpakets mit ihren kürzeren Seiten an den Anlagebereichen an. Es stellen sich somit in Umfangsrichtung betrachtet vier Kontaktzonen zwischen den Anlagebereichen des Blechpaketabschnitts des Gehäuses und dem Blechpaket ein. Jede Kontaktzone erstreckt sich axial, beginnend mit der kürzeren Seite der Druckplatte über die kürzeren Seite der einzelnen Bleche des Blechpakets bis zur ev. kürzeren Seite der zweiten Druckplatte. Somit stellen sich zwischen Oberfläche des Blechpakets und der Innenseite des Blechpaketsabschnitts in den Anlagebereichen axial verlaufende Kontaktzonen ein. Zwischen diesen axial verlaufenden Kontaktzonen befinden sind nunmehr zwischen der Oberfläche des Blechpakets und der Innenseite des Blechpaketabschnitts Freiräume. Auch in diese Freiräume sind Dämmmaterialien, insbesondere Dämmmatten mit den oben beschriebenen vorteilhaften Auswirkungen in der oben ausgeführten Art und Weise einsetzbar.

Die Erfindung sowie weitere vorteilhafte Ausgestaltungen der Erfindung werden im Weiteren anhand von prinzipiell dargestellten Ausführungsbeispielen näher erläutert. Darin zeigen:
- FIG 1: einen prinzipiellen Längsschnitt einer Ausführungsform,
- FIG 2: einen prinzipiellen Längsschnitt einer weiteren Ausführungsform,
- FIG 3: einen Querschnitt durch eine Ausführungsform nach FIG 1,
- FIG 4: einen Querschnitt einer Ausführungsform mit Dämmmatten,
- FIG 5, 6: Ausführungsformen unterschiedlicher Blechpakete im Gehäuse,
- FIG 7: eine Ausführungsform nach FIG 1 mit Dämmmatten,
- FIG 8: Gehäuse mit Blechpaket,
- FIG 9, 10: jeweils ein mehrteiliges Gehäuse,
- FIG 11 bis 13: unterschiedliche Lageranordnungen an einem Gehäuse,
- FIG 14, 15: unterschiedliche Anordnungen von Kühlvorrichtungen an einem Gehäuse,
- FIG 16: prinzipieller Flüssigkeitskühlanschluss an einem Gehäuse,
- FIG 17, 18: Aufsatzkühler bzw. Aufsatzumrichter an einem Gehäuse,
- FIG 19: die Anordnung eines Klemmenkastens an dem Gehäuse,
- FIG 20: Anlagebereiche des Gehäuses,
- FIG 21 bis 24: weitere Ausführungsformen des Gehäuses,
- FIG 25: perspektivische Darstellung einer dynamoelektrischen Maschine.

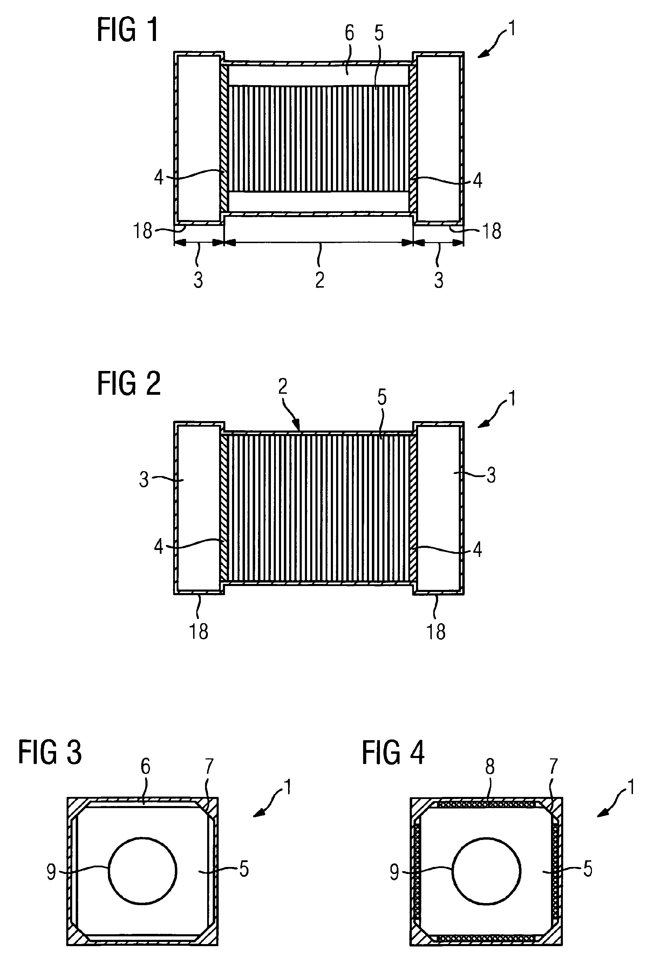

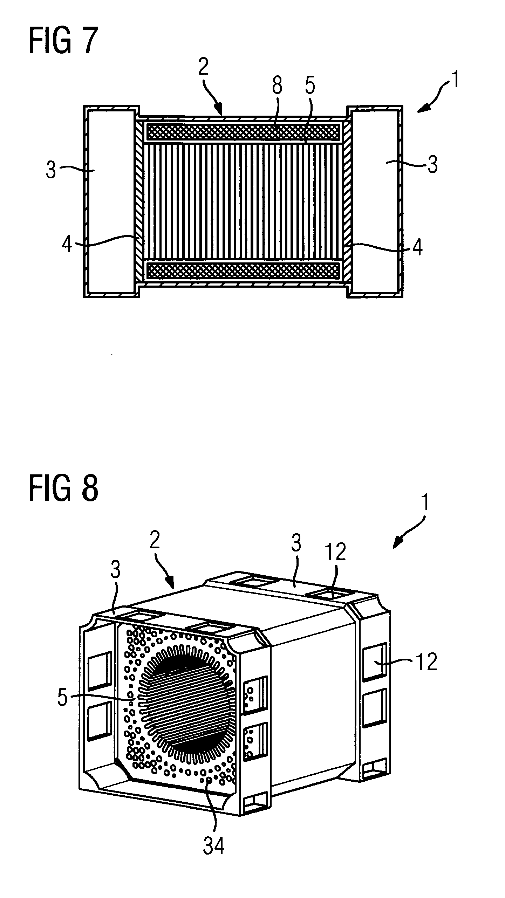

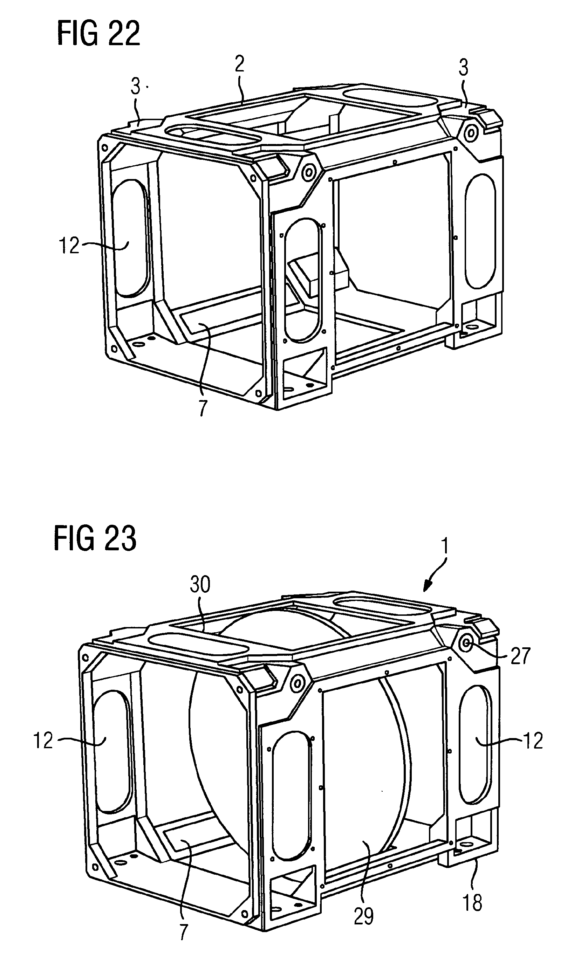

FIG 1 zeigt in einer prinzipiellen Darstellung einen Längsschnitt eines erfindungsgemäßen selbstragenden Gehäuses 1 einer dynamoelektrischen Maschine 23 mit einem Stator 22, dessen Blechpaket 5 durch Druckplatten 4 an den Stirnseiten von axial beschichteten Blechen gebildet ist. Bei der Konstruktionsart eines selbstragenden Gehäuse 1 sind Gehäuseteile bzw. Gehäuseabschnitte, Verstärkungen, Profile und Beplankungen mit unterschiedlichen Fügetechniken (Löten, Schweißen, Kleben) unlösbar miteinander verbunden. Die tragende Funktion wird dabei allein durch diese Gehäusestruktur übernommen. Die Steifigkeit wird durch die kompakte Gehäusestruktur durch ggf. hohle Gehäuseteile mit möglichst großem Querschnitt und somit hohem Widerstandsmoment erreicht. Sicken, Eindellungen etc., wie beispielsweise in FIG 8 und FIG 23, erhöhen die Steifigkeit.

Das Gehäuse 1 muss insbesondere die im Betrieb auftretenden Momente abstützen, es dient somit als Drehmomentenstütze auch für die im Kurzschlussfall auftretenden Momente.

Die Druckplatten 4 paketieren das Blechpaket 5 und drücken es zusammen, so dass sich äußerst enge Spalte zwischen den Blechen ergeben. Dennoch kann durch Kapillarwirkung Staub bzw. Feuchtigkeit in die Spalte eindringen. Das Gehäuse 1 weist einen Blechpaketabschnitt 2 und daran axial anschließende Anschlussabschnitte 3 auf. Die Anschlussabschnitte 3 sind in dieser Darstellung in ihrer Höhe unterschiedlich zum Blechpaketabschnitt 2. Sie können ebenso mit gleichem Querschnitt oder so wie FIG 1 zu entnehmen, mit größerem Querschnitt ausgebildet sein.

Der Blechpaketabschnitt 2 nimmt dabei im Betrieb das Moment aus dem Blechpaket 5 über die Druckplatten 4 auf und leitet dies an die Anschlussabschnitte 3 weiter, die beispielsweise mit einem Fundament verbunden sind.

Falls die Anschlussabschnitte 3 mit größerem Querschnitt ausgebildet sind bilden dabei die unteren Bereiche der Anschlussabschnitte 3 gleichzeitig Füße, auf die die dynamoelektrische Maschine 23 im Betrieb zu stellen ist.

Das Blechpaket 5 ist, wie auch FIG 1 zeigt, nur innerhalb des Blechpaketabschnitts 2 angeordnet Der Blechpaketabschnitt 2 des Gehäuses 1 hat keine weiteren Funktion oder Anschlussmöglichkeiten für externe Zusatzelemente, wie Lüfter etc.. Er dient der Positionierung und ggf. dem Schutz des Blechpakets 5. Zur Montage ist es lediglich vorteilhaft wenn die Anschlussbereiche 3 und/oder der Blechpaketabschnitt 2 Möglichkeiten für Transportösen 27 vorsehen.

FIG 2 zeigt einen Längsschnitt einer dynamoelektrischen Maschine 23, wobei die Unterschiede zwischen FIG 1 darin bestehen, dass die Bleche des Blechpakets 5, als auch die Druckplatten 4 zumindest in vorbestimmten äußeren Umfangsabschnitten den gleichen Durchmesser und den gleichen Querschnitt aufweisen. Das gesamte Blechpaket 5 ist dabei ebenso im Blechpaketabschnitt 2 des Gehäuses 1 angeordnet.

In FIG 1 stützt sich das Blechpaket 5 bestehend aus axial geschichteten Blechen, die durch Druckplatten 4 paketiert werden nur durch die Druckplatten 4 an der Innenseite des Blechabschnitts 2 des Gehäuses 1 in den dafür vorgesehenen Anlagebereichen 7 ab. Die Bleche haben keinen Kontakt zu den Innenseiten des Blechpaketabschnitts 2. Damit werden die Momente der elektrischen Maschine nur über die Kontaktzonen der Druckplatten 4 mit den Anlagebereichen 7 in den Blechpaketabschnitt 2 geleitet.

Gemäß FIG 2 liegen sowohl die kürzeren Seiten der Druckplatten 4 als auch die vorgegebenen Bereiche des Blechpakets 5, also die kürzeren Seiten der Bleche in den Anlagebereichen 7 des Blechpaketsabschnitts 2 an, wie dies auch der FIG 3 zu entnehmen ist.

FIG 3 zeigt, dass insbesondere der Blechpaketabschnitt 2 des Gehäuses 1 in seiner äußeren Grundform viereckig oder auch achteckig ausgebildet sein kann. Die Innenseite des Blechpaketsabschnitts 2 des Gehäuses 1 bildet ein Achteck, das insbesondere an den kürzeren Innenseiten die Anlagebereiche 7 für das Blechpaket 5 und/oder nur für die Druckplatten 4 des Blechpakets 5 bildet.

In einer Statorbohrung 9 in im Betrieb der dynamoelektrischen Maschine ein Läufer angeordnet, der in Lagerschilden drehbar gelagert ist und durch elektromagnetische Wechselwirkung mit dem Wicklungssystem eines Stators 22 beispielsweise ein Drehmoment zum Antrieb einer Arbeitsmaschine erzeugt.

In die sich ergebenden Freiräume 6 zwischen Innenseite des Blechpaketsabschnitts 2 und der Oberfläche des Blechpakets 5 werden, wie FIG 4 zeigt, vorgefertigte Dämmmatten 8 eingelegt, die vorteilhafterweise auf gewisse Frequenzen der die dynamoelektrische Maschine 23 elektrisch versorgenden Umrichter abgestimmt sind. Somit kann der Umrichter weiter mit einer niedrigen Taktfrequenz betrieben werden.

Die Dämmmatten 8 haben eine sehr einfache rechteckige Form und können bereits vorgefertigt bezogen werden. Sie sind von außen nicht sichtbar und sind aufgrund ihrer innenliegenden Anordnung vor äußeren Einflüssen, wie Witterungseinflüsse oder mechanische Beeinträchtigung oder ein Verrutschen geschützt.

Außerdem werden die Dämmmatten 8 vorteilhafterweise durch Klebung, Verschraubung oder zusätzliche Halteösen an der Innenseite des Blechpaketsabschnitts 2 oder am Blechpaket 5 fixiert, so dass ein Verrutschen innerhalb des Freiraumes 6 unterbleibt. Somit ist ausgeschlossen, dass die Dämmmatten 8, beispielsweise aufgrund von Vibrationen im Betrieb der elektrischen Maschine in den Bereich der Wicklung des Stators 22 oder rotierender Teilen der dynamoelektrischen Maschine 23 gelangen.

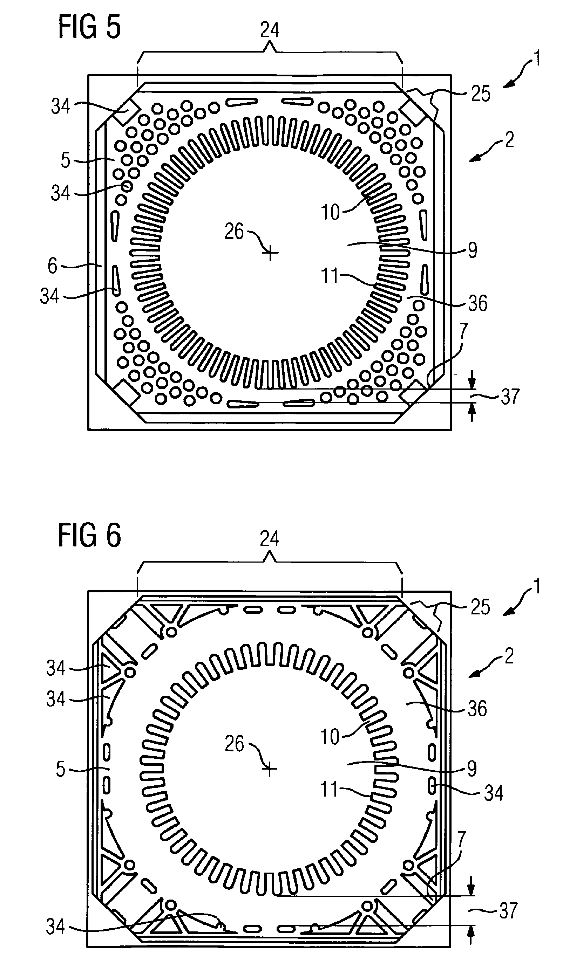

FIG 5, FIG 6 zeigen prinzipielle Querschnittsformen von Blechen unterschiedlicher Blechpakete 5, die jeweils in dem Blechpaketabschnitt 2 angeordnet ist. Die Bleche weisen grundsätzlich eine achteckige Grundform auf, die trotz oberflächenvergrößernder Maßnahmen wie Kerbungen, Ausnehmungen, Klammernuten am äußeren Umfang oder innerhalb des Blechs nicht verlassen wird. Die achteckige Grundform weist dabei kürzere Seiten 25 und längere Seiten 24 auf, die sich in Umfangsrichtung abwechseln und so eine Positionierung und Fixierung des Blechpakets 5 über dessen kürzere Seiten 25 und die Anlagebereiche 7 an der Innenseite des Blechpaketsabschnitts 2 des Gehäuses 1 ermöglichen.

Die Bleche sind dabei senkrecht zu einer virtuellen Achse 26 angeordnet. In Richtung Statorbohrung 9 weist das Blechpaket 5 Nuten 10 und Zähne 11 auf, wobei in den Nuten ein Wicklungssystem angeordnet ist.

Radial nach außen schließt sich ein Jochrücken 36 an, der vorzugsweise keine Ausnehmungen aufweist, die den magnetischen Feldlinienverlauf beeinflussen. Die radiale Ausdehnung 37 des Jochrückens 36 ist dabei vorzugsweise mindestens halb so groß wie die Tiefe einer Nut 10.

Die Ausnehmungen 34 an und in den Blechen, z.B. die Klammernuten und letztendlich auch im Blechpaket 5, bilden axial verlaufende Ausnehmungen. Diese sind geeignet Kühlrohre einer Flüssigkeitskühlung der dynamoelektrischen Maschine 23 aufzunehmen und/oder dienen als Lüftungskanäle einer Eigen- oder Fremdbelüftung der dynamoelektrischen Maschine.

FIG 7 zeigt in einem prinzipiellen Längsschnitt die Ausführungsform nach FIG 1, wobei nun Dämmmatten 8 in den Freiräumen 6 angeordnet sind.

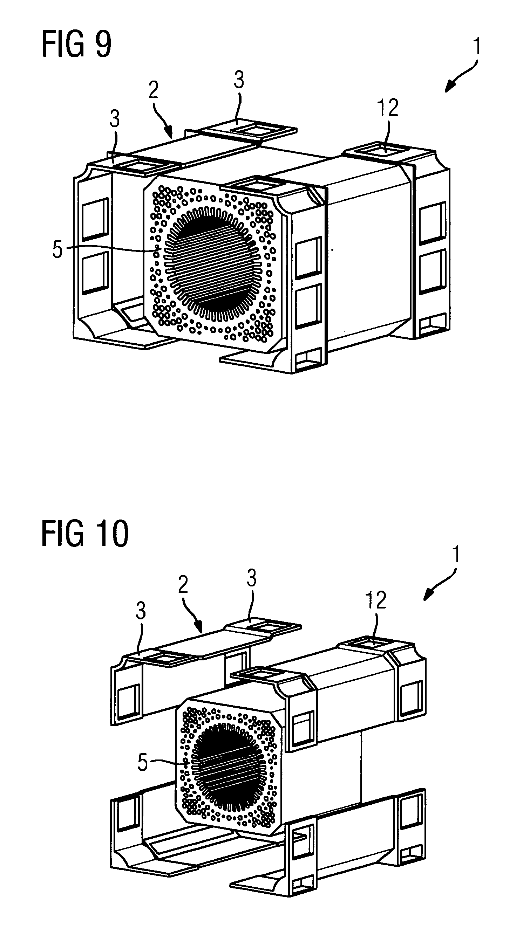

FIG 9 und 10 zeigen, dass sich das gesamte selbsttragende Gehäuse 1 (gemäß FIG 8) aus mehreren axial geteilten Abschnitten zusammensetzbar ist. Dies ist besonders vorteilhaft bei dynamoelektrischen Maschinen größer Achshöhe. Die Montage und das Handling des Gehäuses 1 werden dabei vereinfacht. Jeder axiale Abschnitt weist dabei die dementsprechenden Anteile des Blechpaketabschnitts 2 und der Anschlussabschnitte 3 auf.

Die einzelnen Abschnitte werden kraftschlüssig zusammengesetzt, um die erforderliche Drehmomentenstütze bilden zu können.

Im Anschlussabschnitt 3 sind durch Öffnungen 12 nunmehr sämtliche Anschlussvarianten möglich, die für den Betrieb einer dynamoelektrischen Maschine 23 notwendig sind. Dies sind beispielsweise Anschlüsse von Klemmenkästen, Lüftern, Luftaustauschöffnungen für Rückkühler etc. Werden diese Öffnungen 12 für einen speziellen Maschinentyp und/oder Einsatzzweck nicht benötigt, können diese durch einfache Abdeckungen 33 verschlossen werden.

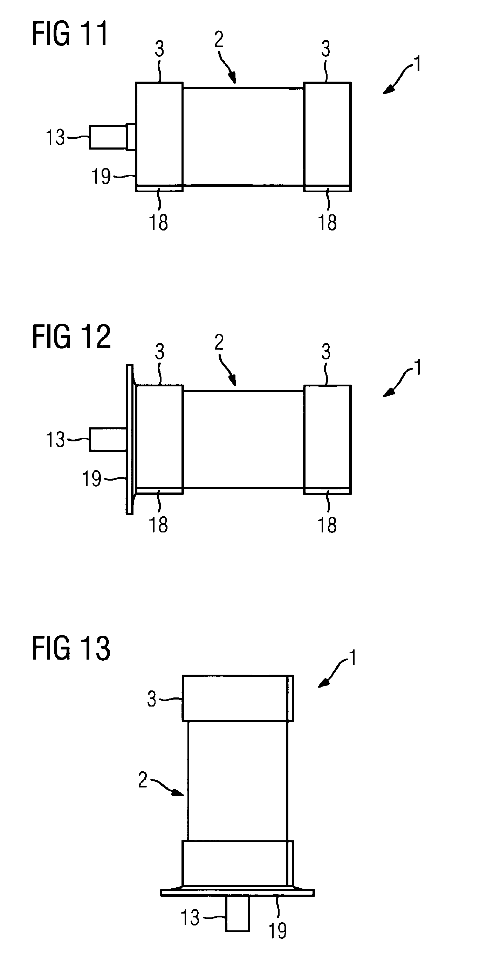

FIG 11 zeigt eine Ausführungsform, bei der ein Wellenstumpf 13 axial aus dem Gehäuse 1 ragt, an den eine Arbeitsmaschine mechanisch koppelbar ist. Ein Lagerschild 19 ist dabei im linken Anschlussabschnitt 3 angeordnet.

Wie FIG 12 und 13 zeigen, sind weitere unterschiedliche Lagerschilde 19 im Anschlussbereich 3 vorstellbar, wobei bei der Auswahl der Lagerschilde 19, der jeweilige Einsatz und Zweck der Arbeitsmaschine, als auch der Aufstellungsart (horizontale oder vertikale Welle 13) dabei zu berücksichtigen ist. Diese Berücksichtigung findet nunmehr erfindungsgemäß im Anschlussabschnitt 3 statt, indem beispielsweise Füße 18 mit einem Fundament verbunden werden.

Damit lassen sich Bauformen elektrischer Maschinen nach IEC 34-7 in einfacher Art und Weise realisieren.

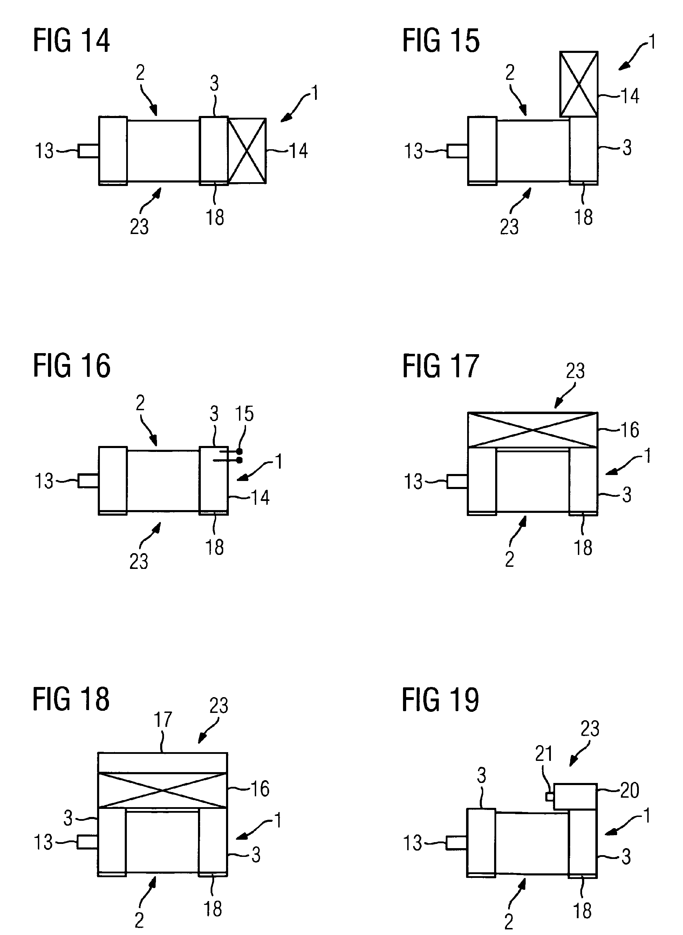

FIG 14 zeigt eine weitere vorteilhafte Ausgestaltung des erfindungsgemäßen Konzeptes, nämlich dass nunmehr eine Lüftervorrichtung 14 an den Anschlussabschnitt 3 anschließbar ist.

Damit ist eine Fremdkühlung der dynamoelektrischen Maschine 23 möglich. Der Blechpaketabschnitt 2 bleibt davon konstruktiv unberührt.

Des Weiteren kann nach FIG 15 ebenfalls eine Kühlvorrichtung oder ein Fremdkühler oberhalb des Anschlussabschnitts 3 angeordnet werden.

FIG 16 zeigt die prinzipielle Möglichkeit des Anschließens einer Flüssigkeitskühlung 15 an die dynamoelektrische Maschine 23. Selbstverständlich sind dafür innerhalb der Ausnehmungen innerhalb oder an dem Blechpaket 5 des Stators 22 Kühlrohre anzuordnen und strömungsmäßig zu verschalten. Vorzugsweise wird dabei ein in Umfangsrichtung betrachtet mäanderförmiger Verlauf der Kühlrohre angestrebt.

FIG 17 zeigt in einer weiteren Ausführungsform das Gehäuse 1 mit seinem Blechpaketabschnitt 2 und den beiden Anschlussabschnitten 3. Die Öffnungen 12 des Anschlussabschnitte 3 münden in einen Wärmetauscher 16, vorteilhafterweise Luft-Luft oder Luft-Wasser-Wärmetauscher wobei die erwärmte bzw. rückgekühlte Kühlluft über dafür vorgesehene Öffnungen 12 der Anschlussabschnitte 3 der dynamoelektrischen Maschine 23 ab- bzw. zuführt wird. Der Blechpaketabschnitt 2 bleibt davon unberührt.

FIG 18 zeigt ergänzend zur Ausführungsform gemäß FIG 17, einen Umrichter 17, der auf dem Wärmetauscher 16 positioniert ist. Der Umrichter 17 wird durch den Wärmetauscher 16 mitgekühlt. Die elektrischen Anschlussleitungen werden dafür durch den Wärmetauscher 16 und über den Anschlussbereich 3 dem Wicklungssystem des Stator 22 der dynamoelektrischen Maschine 23 zugeführt.

FIG 19 zeigt einen Klemmenkasten 20 am Anschlussabschnitt 3, wobei der Klemmenkasten 20 mit der Ausrichtung seines externen elektrischen Anschlusses 21 in unterschiedlichste Richtungen einstellbar ist, um so den externen elektrischen Anschluss 21 zu erleichtern.

Sämtliche Anschlusselemente wie Klemmenkasten 20, Wärmetauscher 16, Umrichter 17 etc. sind allein oder in beliebiger Kombination über die Öffnungen 12 an den Anschlussabschnitten 3 anbringbar.

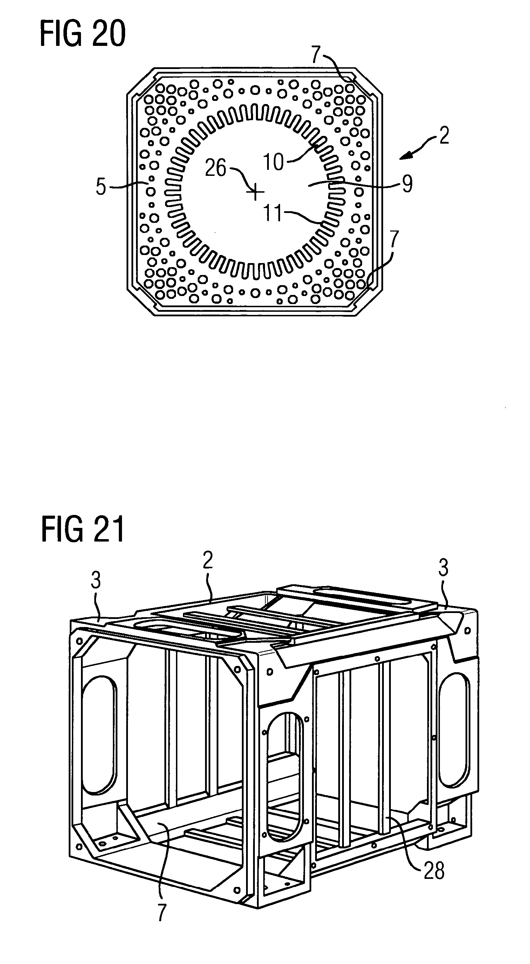

FIG 20 zeigt Anlagebereiche 7 des Blechpaketsabschnitts 2, die in den kürzeren Seiten des achteckigen Gehäuses 1 ausgebildet sind. Durch diese Anlagebereiche 7 wird ein Freiraum 6 zwischen der Innenseite des Blechpaketsabschnitts 2 und der Oberfläche des Blechpakets 5 geschaffen, der wie oben ausgeführt, von Dämmmaterialien ausgefüllt werden kann.

FIG 22 zeigt ein Gehäuse 1, bei dem der erfindungsgemäße Grundgedanke gegenüber den bisher beschriebenen Ausführungsformen erhalten blieb, jedoch im Blechpaketabschnitt 2 die Seitenwände 35 offen sind. Damit wird ebenfalls eine vergleichsweise höhere Steifigkeit gegenüber gehäuselosen Maschinen erreicht.

Dabei sind die ursprünglichen Seitenwände 35 auch austauschbar. Jede Lücke kann durch unterschiedlichste Seitenwände 35 verschlossen werden. Durch Seitenwände 35 mit anderem bzw. dickerem oder dünnerem Material (Kunststoff, GFK ...), werden die Schwingungseigenschaften des Gehäuses 1 beeinflusst. Seitenwände 35 mit einem Einsatz ragen dabei in den Freiraum 6. Dies sind beispielsweise Halteelemente für Dämmmaterial oder Lochbleche.

Um jedoch die Steifigkeit weiter zu erhöhen, sind, wie in FIG 21 gezeigt, in den verbleibenden Öffnungen der Seitenwände der Blechpaketabschnitte 2 Stege 28 vorgesehen.

Durch die fehlenden Seitenwände des Blechabschnitts 2 lassen sich, wie FIG 23 zeigt, die Anlagebereiche 7 beispielsweise mit einem Drehmeißel einer Werkzeugmaschine besonders gut bearbeiten, da die Arbeitsbereiche 29 eines Drehmeißels über die Begrenzungskanten 30 ragen.

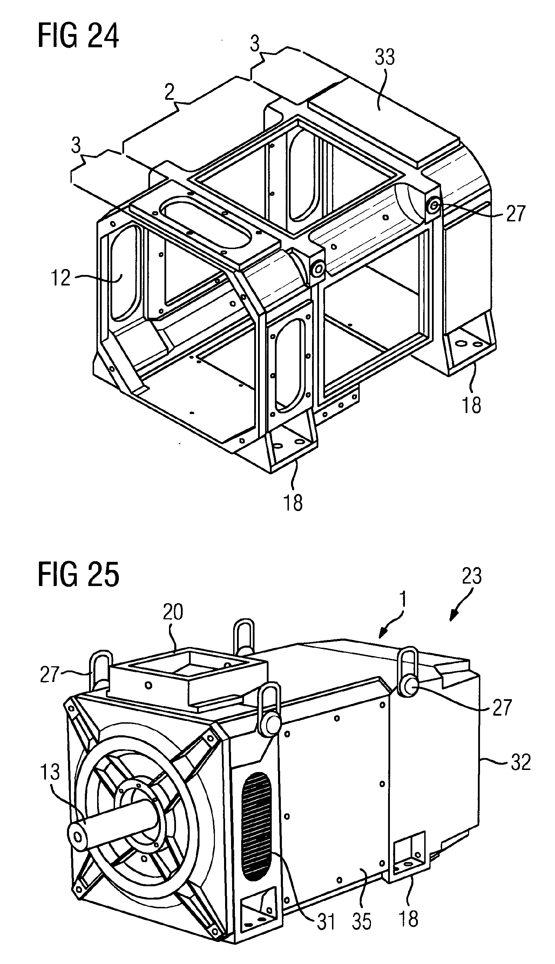

FIG 24 zeigt in perspektivischer Darstellung ein Gehäuse 1, das an den axialen Enden seines Blechpaketabschnitts 2 Materialanhäufungen aufweist, die zur Anbringung einer Transportöse 27 besonders geeignet sind.

FIG 25 zeigt eine dynamoelektrische Maschine 23 in einer möglichen Ausführungsform des beschreibenden Plattformkonzepts, wobei an dem einen Anschlussbereich 3 der Wellenstumpf 13 ragt, der in einem Lagerschild 19 in diesem Anschlussbereich 3 gehalten ist. Des Weiteren ist eine Öffnung 12 dieses Anschlussbereichs 3 mit einem Lüftungsgitter 31, einem Klemmenkasten 20 als auch Transportösen 27 versehen. Der andere Anschlussbereich weist eine Lüftungshaube 32 auf. Die Seitenwand 35 ist separat abgedeckt.

## Patentansprüche

1. Dynamoelektrische Maschine (23) mit einem Blechpaket (5) eines Stators (22) **und** einem selbsttragenden Gehäuse (1) mit folgenden Merkmalen:
- einem Blechpaketabschnitt (2), der das Blechpaket (5) umgibt, wobei das Blechpaket (5) durch axial geschlichtete Bleche gebildet ist und an seinen Stirnseiten zumindest jeweils eine Druckplatte (4) aufweist, wobei die Innenseite des Blechpaketabschnitts (2) derart ausgeführt ist, dass **das** Blechpaket (5) mit einer Grundform eines achteckigen Querschnitts aufgenommen **ist**, wobei dabei in Umfangsrichtung betrachtet abwechselnd kürzere Seiten (25) und längere Seiten (24) des Blechpakets vorhanden sind,
- zumindest einem Anschlussabschnitt (3) in axialer Verlängerung des Blechpaketabschnitts (2) zur Positionierung weiterer Elemente und/oder Vorrichtungen am Gehäuse (1),
- vorgegebene Anlagebereiche (7) **für das** Blechpaket (5) an der Innenseite des Blechpaketabschnitts (2) des Gehäuses (1) zur Positionierung und Fixierung des Blechpakets (5),
- zwischen den Anlagebereichen (7) ist in Umfangsrichtung und/oder in axialer Richtung betrachtet ein Freiraum (6) vorgesehen,
- **wobei die Innenseite des Blechpaketabschnitts (2) des Gehäuses (1) ein Achteck bildet,**
- **wobei die Anlagebereiche (7) des Blechpaketabschnitts (2) in den kürzeren Innenseiten des Gehäuses (1) ausgebildet sind.**

2. Dynamoelektrische Maschine (23) nach Anspruch 1,
**dadurch gekennzeichnet , dass** sich das Blechpaket (5) des Stators (22) ausschließlich über die Druckplatten (4) in den Anlagebereichen (7) des Blechpaketabschnitts (2) des Gehäuses (1) abstützt.

3. Dynamoelektrische Maschine (23) nach einem der vorhergehenden Ansprüche,
**dadurch gekennzeichnet, dass** das Blechpaket (5) des Stators (22) sich über die Druckplatten (4) und das Blechpaket (5), insbesondere den kürzeren Seiten (25) des Blechpakets (5) in den Anlagebereichen (7) am Blechpaketabschnitt (2) abstützt.

4. Dynamoelektrische Maschine (23) nach einem der vorhergehenden Ansprüche,
**dadurch gekennzeichnet, dass** der Freiraum (6) zwischen Oberfläche des Blechpakets (5) und den dazu korrespondierenden Innenseiten des Blechpaketabschnitts (2) mit Dämmmaterial versehen ist.

5. Dynamoelektrische Maschine (23) nach Anspruch 4,
**dadurch gekennzeichnet, dass** das Dämmmaterial in Form von Dämmmatten (8) vorliegt.

6. Dynamoelektrische Maschine (23) nach Anspruch 4 oder 5,
**dadurch gekennzeichnet, dass** das Dämmmaterial auf vorgegebene absorbierende Frequenzen abgestimmt ist.

7. Dynamoelektrische Maschine (23) nach einem der vorhergehenden Ansprüche,
**dadurch gekennzeichnet, dass** das selbsttragende Gehäuse (1) in Umfangsrichtung betrachtet ein-, zwei- oder mehrteilig aufgebaut ist.

8. Dynamoelektrische Maschine (23) nach einem der vorhergehenden Ansprüche,
**dadurch gekennzeichnet, dass** ausschließlich über den Anschlussabschnitt (3) Anbauelemente wie Kühlsysteme, Klemmkasten (20), Lagerschilde (19) anbringbar sind.

9. Dynamoelektrische Maschine (23) nach einem der Ansprüche 1 bis 8, **dadurch gekennzeichnet,**
**dass** an Anschlussbereichen (3) Kühlaggregate für Stator (22) und/oder Rotor vorgesehen sind.

## Claims

1. Dynamoelectric machine (23) having a laminated core (5) of a stator (22) **and** a self-supporting housing (1) having the following features:
- a laminated core section (2) surrounding the laminated core (5), wherein the laminated core (5) is formed by means of axially layered lamination plates and on each of its end faces has at least one pressure plate (4), wherein the inside of the laminated core section (2) is designed in such a way that **the** laminated core (5) having a basic shape in the form of an octagonal cross-section **is** accommodated, wherein, when viewed in the peripheral direction, shorter sides (25) and longer sides (24) of the laminated core are present in alternation,
- at least one connecting section (3) in axial extension of the laminated core section (2) in order to enable further elements and/or devices to be positioned on the housing (1),
- predefined bearing zones (7) **for the** laminated core (5) on the inside of the laminated core section (2) of the housing (1) in order to position and fix the laminated core (5),
- when viewed in the peripheral direction and/or in the axial direction, a free space (6) is provided between the bearing zones (7),
- **wherein the inside of the laminated core section (2) of the housing (1) forms an octagon,**
- **wherein the bearing zones (7) of the laminated core section (2) are embodied in the shorter internal sides of the housing (1).**

2. Dynamoelectric machine (23) according to claim 1,
**characterised in that** the laminated core (5) of the stator (22) is supported exclusively by way of the pressure plates (4) in the bearing zones (7) of the laminated core section (2) of the housing (1).

3. Dynamoelectric machine (23) according to one of the preceding claims,
**c h a r a c t e r i s e d i n t h a t** the laminated core (5) of the stator (22) is supported by way of the pressure plates (4) and the laminated core (5), in particular the shorter sides (25) of the laminated core (5) in the bearing zones (7) on the laminated core section (2).

4. Dynamoelectric machine (23) according to one of the preceding claims,
**c h a r a c t e r i s e d i n t h a t** the free space (6) between the surface of the laminated core (5) and the internal sides of the laminated core section (2) corresponding thereto is provided with soundproofing material.

5. Dynamoelectric machine (23) according to claim 4,
**c h a r a c t e r i s e d in that** the soundproofing material is present in the form of soundproofing mats (8).

6. Dynamoelectric machine (23) according to claim 4 or 5,
**c h a r a c t e r i s e d in that** the soundproofing material is tuned to predefined absorbing frequencies.

7. Dynamoelectric machine (23) according to one of the preceding claims,
**c h a r a c t e r i s e d i n t h a t ,** when viewed in the peripheral direction, the self-supporting housing (1) is designed as a single-part, two-part or multipart structure.

8. Dynamoelectric machine (23) according to one of the preceding claims,
**characterised in that** add-on elements such as cooling systems, terminal boxes (20) and end shields (19) can be mounted exclusively by way of the connecting section (3).

9. Dynamoelectric machine (23) according to one of claims 1 to 8, **characterised in that** cooling units for stator (22) and/or rotor are provided at connecting sections (3).

## Revendications

1. Machine ( 23 ) dynamoélectrique comprenant un paquet ( 15 ) de tôles d'un stator ( 22 ) et une carcasse ( 1 ) autoportante, ayant les caractéristiques suivantes :
- une partie (2) de paquet de tôles, qui entoure le paquet ( 5 ) de tôles, le paquet ( 5 ) de tôles étant formé par des tôles feuilletées et ayant sur ses côtés frontaux au moins respectivement une plaque ( 4 ) d'application d'une pression, la face intérieure de la partie ( 2 ) de paquet de tôles étant réalisée de manière à ce que le paquet ( 5 ) de tôles soit reçu par une forme de base d'une section transversale octogonale, des faces ( 25 ) courtes et des phases ( 24 ) longues du paquet de tôles alternant, considérées dans les directions périphériques,
- au moins une partie ( 3 ) de raccordement dans le prolongement axial de la partie ( 2 ) de paquet de tôles pour la mise en position d'autres éléments et/ou dispositifs sur la carcasse ( 1 ),
- des parties ( 7 ) d'application données à l'avance du paquet ( 5 ) de tôles sur la face intérieure de la partie ( 2 ) de paquet de tôles de la carcasse ( 1 ) pour la mise en position et l'immobilisation du paquet ( 5 ) de tôles,
- entre les parties ( 7 ) d'application il y a un espace ( 6 ) libre considéré dans la direction périphérique et/ou dans la direction axiale,
- la face intérieure de la partie ( 2 ) de paquet de tôles de la carcasse ( 1 ) formant un octogone,
- les zones ( 7 ) d'application de la partie ( 2 ) de paquet de tôles étant formées dans les faces intérieures courtes de la carcasse ( 1 ) .

2. Machine ( 23 ) dynamoélectrique suivant la revendication 1, **caractérisée en ce que** le paquet ( 5 ) de tôles du stator ( 22 ) s'appuie, exclusivement par l'intermédiaire des plaques ( 4 ) d'application d'une pression, dans les zones ( 7 ) d'application de la partie ( 2 ) de paquets de tôles de la carcasse ( 1 ).

3. Machine ( 23 ) dynamoélectrique suivant l'une des revendications précédentes,
**caractérisée en ce que** le paquet ( 5 ) de tôles du stator ( 22 ) s'appuie, par l'intermédiaire des plaques ( 4 ) d'application d'une pression et le paquet ( 5 ) de tôles, notamment pars les faces ( 25 ) courtes du paquet ( 5 ) de tôles dans les parties ( 7 ) d'application, à la partie ( 2 ) de paquet de tôles.

4. Machine ( 23 ) dynamoélectrique suivant l'une des revendications précédentes,
**caractérisée en ce que** l'espace ( 6 ) libre entre une surface du paquet ( 5 ) de tôles et les faces intérieures qui y correspondent de la partie ( 2 ) de paquet de tôles sont pourvues de matière d'amortissement.

5. Machine ( 23 ) dynamoélectrique suivant la revendication 4,
**caractérisée en ce que** la matière d'amortissement est présente sous la forme de nappes ( 5 ) d'amortissement.

6. Machine ( 23 ) dynamoélectrique suivant la revendication 4 ou 5,
**caractérisée en ce que** la matière d'amortissement est adaptée à des fréquences d'absorption données à l'avance.

7. Machine ( 23 ) dynamoélectrique suivant l'une des revendications précédentes,
**caractérisée en ce que** la carcasse ( 1 ) autoportante est constituée, considérée dans la direction périphérique, en une pièce, en deux pièces ou en plusieurs pièces.

8. Machine ( 23 ) dynamoélectrique suivant l'une des revendications précédentes,
**caractérisée en ce que** des éléments d'adjonction, comme des systèmes de refroidissement, des boîtes ( 20 ) de bornes, des flasques ( 19 ), peuvent être mis exclusivement par l'intermédiaire de la partie ( 3 ) de raccordement.

9. Machine ( 23 ) dynamoélectrique suivant l'une des revendication 1 à 8,
**caractérisée en ce que** des groupes de refroidissement du stator ( 22 ) et/ou du rotor sont prévus sur les parties ( 3 ) de raccordement.
